(19) Europäisches Patentamt
European Patent Office
Office européen des brevets

(11) **EP 1 752 980 A1**

(12) **EUROPEAN PATENT APPLICATION**
published in accordance with Art. 158(3) EPC

(43) Date of publication:
**14.02.2007 Bulletin 2007/07**

(51) Int Cl.:
***G11B 7/26*** *(2006.01)*

(21) Application number: **05727082.9**

(22) Date of filing: **22.03.2005**

(86) International application number:
**PCT/JP2005/005132**

(87) International publication number:
**WO 2005/114663 (01.12.2005 Gazette 2005/48)**

(84) Designated Contracting States:
**DE FR GB TR**

(30) Priority: **21.05.2004 JP 2004152191**

(71) Applicants:
• **Lintec Corporation**
**Tokyo 173-0001 (JP)**
• **SONY DISC TECHNOLOGY INC.**
**Tokyo 141-0001 (JP)**

(72) Inventors:
• **KUBOTA, Shin,**
**c/o LINTEC CORPORATION**
**Warabi-shi, Saitama 3350005 (JP)**

• **MIYATA, Sou,**
**c/o LINTEC CORPORATION**
**Warabi-shi, Saitama 3350005 (JP)**
• **YOSHIMURA, Hideaki**
**SONY DISC**
**Digital Solutions Inc**
**Tokyo 141-0001 (JP)**

(74) Representative: **Nicholls, Michael John**
**J.A. KEMP & CO.**
**14, South Square**
**Gray's Inn**
**London WC1R 5JJ (GB)**

(54) **SHEET FOR PRODUCTION OF OPTICAL RECORDING MEDIUM**

(57) An optical disk-producing sheet 1 comprising an energy ray-curable stamper-receiving layer 11 onto which can be transferred convexoconcave of a stamper S, and release sheets 12 and 12', wherein the adhesive strength after curing of the stamper-receiving layer 11 to a reflective layer 3 is greater than the adhesive strength after curing of the stamper-receiving layer 11 to the stamper S, the difference between the two adhesive strengths being not less than 50 mN/25mm. According to this optical disk-producing sheet 1, when the cured stamper-receiving layer 11 and the stamper S are separated from one another, there is no peeling away between the stamper-receiving layer 11 and the reflective layer 3.

Fig.2

**Description**

<u>TECHNICAL FIELD</u>

The present invention relates to an optical recording medium-producing sheet, and more particularly to an optical recording medium-producing sheet having a stamper-receiving layer onto which a convexoconcave pattern of a stamper is transferred so as to form pits or grooves/lands.

<u>BACKGROUND ART</u>

In recent years, a method of producing an optical disk using a transfer sheet that is easily deformable through application of pressure and is photocurable has been proposed (Japanese Patent Application Laid-open No. 2003-272244). In this optical disk producing method, first, a transfer sheet is laminated onto a reflective layer on a convexoconcave surface of a substrate, the surface having the convexoconcave thereon as recording pits, and a stamper having convexoconcave thereon as recording pits is pressed against the surface of the transfer sheet. Next, irradiation with ultraviolet rays is carried out in this state so as to cure the transfer sheet, and then the stamper is removed, so that convexoconcave such as recording pits are provided on the surface of the transfer sheet. Then, a reflective layer (semi-transmitting reflective layer) is provided on the convexoconcave, and then an organic polymer film is further stuck thereon via an adhesive layer.

<u>DISCLOSURE OF THE INVENTION</u>

<u>PROBLEM TO BE SOLVED BY THE INVENTION</u>

With such a photocurable transfer sheet, the adhesive strength decreases upon curing by irradiating with ultraviolet rays, and hence the stamper can be separated away from the cured transfer sheet; however, the adhesive strength to the reflective layer also decreases at the same time, and hence it has been the case that when the stamper is separated away, the cured transfer sheet may peel away from the reflective layer due to the transfer sheet being pulled by the stamper.

The present invention has been accomplished in view of this state of affairs; it is an object of the present invention to provide an optical recording medium-producing sheet according to which, when a cured stamper-receiving layer and a stamper are separated from one another, there is no peeling away between the stamper-receiving layer and a layer adjacent to the stamper-receiving layer.

<u>MEANS FOR SOLVING THE PROBLEM</u>

To attain the above object, the present invention provides an optical recording medium-producing sheet having an energy ray-curable stamper-receiving layer onto which can be transferred convexoconcave of a stamper, wherein an adhesive strength after curing of the stamper-receiving layer to a layer that is adjacent to the stamper-receiving layer during pressing with the stamper is greater than an adhesive strength after curing of the stamper-receiving layer to the stamper, a difference between the two adhesive strengths being not less than 50 mN/25mm (invention 1).

"Optical recording medium" in the present specification means a medium for which recording and reproduction of data can be carried out optically; included under this are mainly read-only, write-once or rewritable disk-shaped media (so-called optical disks (including optical magnetic disks) such as a CD, a CD-ROM, a CD-R, a CD-RW, a DVD, a DVD-ROM, a DVD-R, a DVD-RW, a DVD-RAM, an LD, a Blu-ray Disc, an MO, or the like), although there is no limitation thereto.

The "layer that is adjacent to the stamper-receiving layer during pressing with the stamper" (sometimes referred to as the "stamper-receiving layer-adjacent layer" hereinafter) is the layer that is adjacent to the surface of the stamper-receiving layer on the opposite side to the surface pressed by the stamper, and is generally a reflective layer, although there is no limitation thereto. Such a reflective layer may be a single-layer, or may be a multi-layer. Moreover, "adhesive strength" refers not to the adhesive strength at one point on the bonded surface, but rather to the average value of the adhesive strength over the whole of the bonded surface.

According to the above invention (invention 1), the adhesive strength of the stamper-receiving layer after curing to the stamper-receiving layer-adjacent layer is greater by not less than 50 mN/25mm than the adhesive strength of the stamper-receiving layer after curing to the stamper, and hence when the cured stamper-receiving layer and the stamper are separated from one another, peeling away between the stamper-receiving layer and the stamper-receiving layer-adjacent layer can be prevented.

In the case of the above invention (invention 1), preferably, the adhesive strength after curing of the stamper-receiving layer to the stamper is less than any inter-layer adhesive strength within a laminate having the stamper-receivinglayerlaminated therein during pressing with the stamper (invention 2).

According to the above invention (invention 2), even in the case that the stamper-receiving layer and the stamper are separated from one another through application of an external force to a layer of the laminate on the opposite side to the stamper-receiving layer, peeling away can be prevented from occurring not only between the stamper-receiving layer and the stamper-receiving layer-adjacent layer, but also between layers in the laminate.

In the case of the above inventions (inventions 1 and 2), in the case that the layer adjacent to the stamper-receiving layer during pressing with the stamper is made of silver or a silver alloy, and the adhesive strength after curing of the stamper-receiving layer to the silver or silver alloy is preferably not less than 200 mN/25mm (invention 3).

Moreover, in the case of the above inventions (inventions 1 to 3), in the case that the stamper is made of nickel, the adhesive strength after curing of the stamper-receiving layer to the nickel is preferably not more than 150 mN/25mm (invention 4). Here, "the stamper is made of nickel" means that the stamper has a transferring surface (convexoconcave surface) made of a metal having a nickel content of not less than 70 wt%.

In the case of the above inventions (inventions 1 to 4), the stamper-receiving layer preferably has as a constituent component thereof an acrylic ester copolymer having energy ray-curable groups and carboxyl groups on side chains thereof (invention 5). Such an acrylic ester copolymer has properties desirable for the stamper-receiving layer; the convexoconcave pattern of a stamper can be transferred thereto precisely, and moreover when the stamper-receiving layer is separated away from the stamper after curing, hardly any matter remains attached to the stamper. Moreover, due to the acrylic ester copolymer having carboxyl groups on side chains thereof, the adhesive strength to silver or a silver alloy can be made to be much greater than the adhesive strength to nickel.

In the case of the above invention (invention 5), the amount of carboxyl groups present in the acrylic ester copolymer is preferably from 5 to 30 mol% in terms of monomers (invention 6). For such an acrylic ester copolymer, the adhesive strength to silver or a silver alloy can be made to be markedly greater than the adhesive strength to nickel.

EFFECTS OF THE INVENTION

According to the optical recording medium-producing sheet of the present invention, when the cured stamper-receiving layer and the stamper are separated from one another, peeling away between the stamper-receiving layer and a layer adjacent to the stamper-receiving layer can be prevented, and hence the optical recording medium producing yield can be improved.

BRIEF DESCRIPTION OF THE DRAWINGS

FIG. 1 is a sectional view of an optical disk-producing sheet according to an embodiment of the present invention; and

FIG. 2 consists of sectional views showing an example of an optical disk producing method using the optical disk-producing sheet according to the above embodiment.

EXPLANATION OF REFERENCE NUMERALS

1:          optical disk-producing sheet
             (optical recording medium-producing sheet)
11:        stamper-receiving layer
12, 12':   release sheet
2:          optical disk substrate
3:          reflective layer
3':         semi-transmitting reflective layer
4:          adhesive
5:          cover sheet

BEST MODE FOR CARRYING OUT THE INVENTION

Following is a description of an embodiment of the present invention.

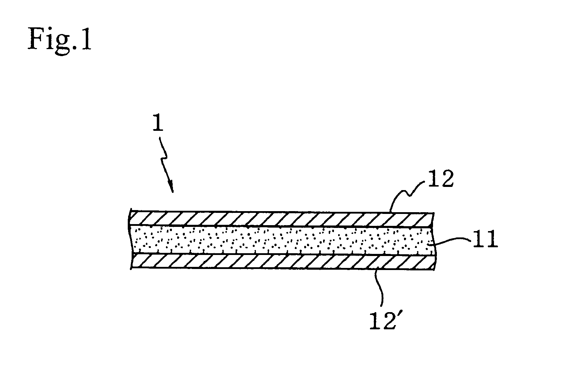

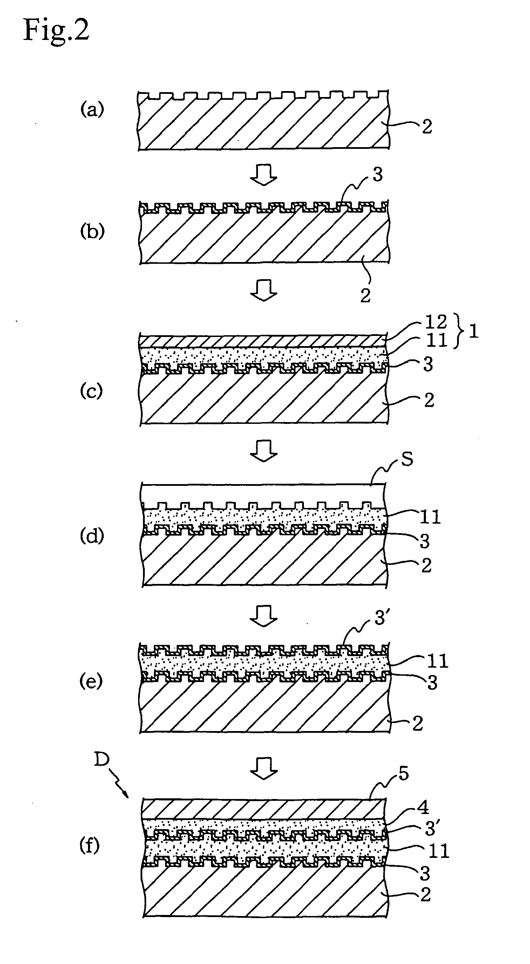

FIG. 1 is a sectional view of an optical disk-producing sheet according to an embodiment of the present invention, and FIGS. 2(a) to 2(f) are sectional views showing an example of an optical disk producing method using the optical disk-producing sheet according to this embodiment.

As shown in FIG. 1, the optical disk-producing sheet 1 according to the present embodiment comprises a stamper-receiving layer 11, a release sheet 12 laminated on one surface of the stamper-receiving layer 11, and a release sheet 12' laminated on the other surface of the stamper-receiving layer 11. Note, however, that the release sheets 12 and 12' are peeled off when using the optical disk-producing sheet 1.

The stamper-receiving layer 11 is a layer onto which a convexoconcave pattern formed on a stamper will be transferred so as to form pits or grooves/lands, and is energy ray-curable.

The adhesive strength after curing of the stamper-receiving layer 11 to a reflective layer 3 of an optical disk D, described below, must be greater than the adhesive strength after curing of the stamper-receiving layer 11 to a stamper S, the difference between these two adhesive strengths being not less than 50 mN/25mm, preferably not less than 100 mN/25mm.

Due to there being such a difference between the two adhesive strengths, when the cured stamper-receiving layer 11 and the stamper S are separated from one another, peeling away between the stamper-receiving layer 11 and the reflective layer 3 due to the stamper-receiving layer 11 being pulled by the stamper S can be prevented.

Moreover, the adhesive strength after curing of the stamper-receiving layer 11 to the stamper S is preferably less than any inter-layer adhesive strength within a laminate having the stamper-receiving layer 11 laminated therein. Asa result, even in the case that the laminate and the stamper S are separated from one another through application of an external force to a layer of the laminate on the opposite side to the stamper-receiving layer 11 (an optical disk substrate 2 in the example described below), peeling away can be prevented from occurring not only between the stamper-receiving layer 11 and the reflective layer 3 but also between layers in the laminate.

The reflective layer 3 may be a single-layer, or may be a multi-layer comprising, for example, a reflective layer, a dielectric layer, a phase change layer, and a dielectric layer. Moreover, the laminate may comprise an optical disk substrate 2 and a reflective layer 3 as in the example described below, or may be a laminate in which at least two recording layers each comprising a reflective layer 3 and a stamper-receiving layer 11 onto which a convexoconcave pattern has been transferred are laminated onto an optical disk substrate 2, and then a reflective layer 3 is formed on the uppermost one of the stamper-receiving layers 11 onto which a convexoconcave pattern has been transferred. The above inter-layer adhesive strength thus includes not only the adhesive strength between the optical disk substrate 2 and a reflective layer 3, but also the adhesive strength between the various layers such as a reflective layer, a dielectric layer, a phase change layer, and a dielectric layer within a reflective layer 3 that comprises a multi-layer, the adhesive strength between two of the above recording layers, or the adhesive strength within one of the above recording layers between the reflective layer 3 thereof and the stamper-receiving layer 11 thereof onto which the convexoconcave pattern has been transferred.

Here, in the case that the reflective layer 3 is made of silver or a silver alloy, the adhesive strength after curing of the stamper-receiving layer 11 to the silver or silver alloy is preferably not less than 200 mN/25mm, more preferably not less than 300 mN/25mm. Examples of a silver alloy include Ag-Pd-Cu and Ag-Nd-Cu.

Moreover, in the case that the stamper is made of nickel, the adhesive strength after curing of the stamper-receiving layer 11 to the nickel is preferably not more than 150 mN/25mm, more preferably not more than 140 mN/25mm.

Meanwhile, the storage modulus of the stamper-receiving layer 11 before curing is preferably from $1 \times 10^3$ to $1 \times 10^6$ Pa, particularly preferably from $1 \times 10^4$ to $5 \times 10^5$ Pa. Here, the measurement temperature of the storage modulus before curing is made to be the same as the temperature of the working environment when the stamper and the optical disk-producing sheet 1 are placed (pressed) together. That is, in the case that the stamper and the optical disk-producing sheet 1 are placed together at room temperature, the storage modulus is that measured at room temperature, whereas in the case that the stamper and the optical disk-producing sheet 1 are placed together under heating, the storage modulus is that measured at the same temperature as this heating temperature.

If the storage modulus of the stamper-receiving layer 11 before curing is in a range as above, then the convexoconcave pattern formed on the stamper can be precisely transferred onto the stamper-receiving layer 11 merely by pressing the stamper against the stamper-receiving layer 11, and hence optical disk manufacture becomes very easy.

Moreover, the storage modulus of the stamper-receiving layer 11 after curing is preferably not less than $1 \times 10^7$ Pa, particularly preferably from $1 \times 10^8$ to $1 \times 10^{11}$ Pa. Here, the measurement temperature of the storage modulus after curing is made to be the same as the temperature of the storage environment for the optical disk, i.e. room temperature.

If the storage modulus of the stamper-receiving layer 11 after curing is in a range as above, then the pits or grooves/lands transferred onto the stamper-receiving layer 11 are fixed reliably through the curing, and hence there is no risk of the pits or grooves/lands being destroyed or deformed when the stamper and the stamper-receiving layer 11 are separated from one another.

The material constituting the stamper-receiving layer 11 is preferably one having an energy ray-curable polymer component as a principal component thereof, but may instead be one having a mixture of a polymer component that is not energy ray-curable and an energy ray-curable polyfunctional monomer or oligomer as a principal component thereof.

Following is a description of the case that the stamper-receiving layer 11 has an energy ray-curable polymer component as a principal component thereof.

The energy ray-curable polymer component in the stamper-receiving layer 11 is preferably an acrylic ester copolymer having energy ray-curable groups and carboxyl groups on side chains thereof. Moreover, the acrylic ester copolymer is preferably an energy ray-curable acrylic ester copolymer (A) having energy ray-curable groups and carboxyl groups on side chains thereof and having a weight average molecular weight (Mw) of not less than 100, 000, obtained by reacting together an acrylic copolymer having functional group-containing monomer units (a1) and an unsaturated group-containing compound having a substituent that will bond to the functional group (a2).

The average side chain introduction rate of the energy ray-curable groups in the energy ray-curable acrylic ester copolymer (A) is preferably from 0.1 to 50 mol%, particularly preferably from 3 to 30 mol%. If the average side chain introduction rate of the energy ray-curable groups is less than 0.1 mol%, then it will not be possible to obtain the desired energy ray curability, whereas if the average side chain introduction rate of the energy ray-curable groups is greater than 50 mol%, then the volumetric shrinkage of the stamper-receiving layer 11 upon curing may become high.

The average side chain introduction rate of the energy ray-curable groups is calculated using the following equation.

$$\text{Average side chain introduction rate of energy ray-curable groups} = (\text{number of mols of energy ray-curable groups} / \text{total number of mols of monomers constituting acrylic copolymer}) \times 100$$

The acrylic copolymer (a1) comprises constituent units derived from functional group-containing monomer(s), and constituent units derived from (meth) acrylic ester monomer (s) or derivative(s) thereof. Here, (meth)acrylic ester monomer (s)' in the present specification means acrylic ester monomer(s) and/or methacrylic ester monomer(s).

Each of the functional group-containing monomer(s) in the acrylic copolymer (a1) is a monomer having, in the molecule thereof, a polymerizable double bond, and a functional group such as a carboxyl group, a hydroxyl group, an amino group, a substituted amino group or an epoxy group; a carboxyl group-containing unsaturated compound is preferably used.

Specific examples of such carboxyl group-containing unsaturated compounds include acrylic acid, methacrylic acid and itaconic acid; these can be used singly, or a plurality can be used in combination.

As each of the (meth)acrylic ester monomer(s) in the acrylic copolymer (a1), a cycloalkyl (meth)acrylate, benzyl (meth)acrylate, or an alkyl (meth)acrylate having from 1 to 18 carbon atoms in the alkyl group thereof can be used. Of these, it is particularly preferable to use an alkyl (meth)acrylate having from 1 to 18 carbon atoms in the alkyl group thereof, for example methyl (meth)acrylate, ethyl (meth)acrylate, propyl (meth)acrylate, n-butyl (meth)acrylate or 2-ethylhexyl (meth)acrylate.

The acrylic copolymer (a1) contains the constituent units derived from the functional group-containing monomer (s) in a proportion of generally from 3 to 100 wt%, preferably from 5 to 40 wt%, particularly preferably from 10 to 30 wt%, and contains the constituent units derived from the (meth) acrylic ester monomer(s) or derivative(s) thereof in a proportion of generally from 0 to 97 wt%, preferably from 60 to 95 wt%, particularly preferably from 70 to 90 wt%.

The acrylic copolymer (a1) is obtained by copolymerizing the functional group-containing monomer(s) and the (meth) acrylic ester monomer (s) or derivative (s) thereof using an ordinary method; in addition to these monomers, a small amount (e.g. not more than 10 wt%, preferably not more than 5 wt%) of dimethylacrylamide, vinyl formate, vinyl acetate, styrene or the like may also be included in the copolymerization.

The substituent possessed by the unsaturated group-containing compound (a2) reacted with the acrylic copolymer (a1) can be selected as appropriate in accordance with the type of the functional group in the functional group-containing monomer units of the acrylic copolymer (a1). For example, in the case that the functional group is a carboxyl group, an isocyanate group, an aziridinyl group, an epoxy group or an oxazoline group is preferable as the substituent. One such substituent is contained in each molecule of the unsaturated group-containing compound (a2).

Moreover, the unsaturated group-containing compound (a2) contains from 1 to 5, preferably 1 or 2, energy ray-polymerizable carbon-carbon double bonds in each molecule thereof. Specific examples of such unsaturated group-containing compounds (a2) include, for example, 2-methacryloyloxyethyl isocyanate, meta-isopropenyl-α,α-dimethylbenzyl isocyanate, methacryloyl isocyanate, and allyl isocyanate; acryloyl monoisocyanate compounds obtained by reacting together a diisocyanate compound or a polyisocyanate compound and hydroxyethyl (meth)acrylate; acryloyl monoisocyanate compounds obtained by reacting together a diisocyanate compound or a polyisocyanate compound, a polyol compound, and hydroxyethyl (meth)acrylate; glycidyl (meth)acrylate; and (meth)acrylic acid, 2-(1-aziridinyl)ethyl (meth)acrylate, 2-vinyl-2-oxazoline, and 2-isopropenyl-2-oxazoline.

The unsaturated group-containing compound (a2) is generally used in a proportion of from 10 to 100 equivalents, preferably from 20 to 95 equivalents, particularly preferably from 25 to 90 equivalents, per 100 equivalents of the functional group-containing monomer(s) in the acrylic copolymer (a1).

In the reaction between the acrylic copolymer (a1) and the unsaturated group-containing compound (a2), the reaction temperature, pressure, solvent, and time, and whether or not a catalyst is used and the type of the catalyst if used, can be selected as appropriate in accordance with the combination of the functional group and the substituent. As a result, the functional group present on the side chains of the acrylic copolymer (a1) reacts with the substituent in the unsaturated group-containing compound (a2), and hence the unsaturated group is introduced onto the side chains of the acrylic copolymer (a1), whereby the energy ray-curable acrylic ester copolymer (A) is obtained. The reaction ratio between the functional group and the substituent in the reaction is generally not less than 70%, preferably not less than 80%; unreacted carboxyl groups must remain in the energy ray-curable acrylic ester copolymer (A).

The amount of carboxyl groups present (remaining) in the energy ray-curable acrylic ester copolymer (A) is preferably from 5 to 30 mol%, more preferably from 10 to 25 mol%, in terms of the monomers. Note that in the case that the carboxyl groups in the functional group-containing monomer(s) in the acrylic copolymer (a1) and the unsaturated group-containing compound (a2) react together, the amount of carboxyl groups present will be the value calculated based on:

```
(number of mols of carboxyl group-containing monomer(s)) −

(number of mols of unsaturated group-containing compound).
```

If carboxyl groups are present in the energy ray-curable acrylic ester copolymer (A) as described above, then the adhesive strength after curing of the stamper-receiving layer 11 to a reflective layer 3 is markedly increased. In particular, the adhesive strength after curing of the stamper-receiving layer 11 to a reflective layer 3 made of silver or a silver alloy can be made to be not less than 200 mN/25mm. On the other hand, the adhesive strength after curing of the stamper-receiving layer 11 to a stamper S made of nickel can be made to be not more than 150 mN/25mm.

The weight average molecular weight (Mw) of the energy ray-curable acrylic ester copolymer (A) is preferably not less than 100,000, particularly preferably from 150,000 to 1,500,000, yet more preferably from 200,000 to 1,000,000.

Here, in the case of using ultraviolet rays as the energy rays, by adding a photopolymerization initiator (B) to the energy ray-curable acrylic ester copolymer (A), the polymerization curing time and the irradiation amount can be reduced.

Specific examples of such photopolymerization initiators (B) include benzophenones, acetophenones, benzoin, benzoin methyl ether, benzoin ethyl ether, benzoin isopropyl ether, benzoin isobutyl ether, benzoyl benzoic acid, benzoyl methyl benzoate, benzoin dimethyl ketal, 2,4-diethylthioxanthone, 1-hydroxycyclohexyl phenyl ketone, benzyl diphenyl sulfide, tetramethylthiuram monosulfide, azobisisobutyronitrile, benzyl, dibenzyl, diacetyl, β-chloroanthraquinone, (2,4,6-trimethylbenzyl-diphenyl)phosphine oxide, 2-benzothiazole-N,N-diethyldithiocarbamate, and oligo{2-hydroxy-2-methyl-1-[4-(1-propenyl)phenyl]propanon e}. The photopolymerization initiator (B) is preferably used in an amount in a range of from 0.1 to 10 parts by weight, particularly preferably 0.5 to 5 parts by weight, per 100 parts by weight of the energy ray-curable acrylic ester copolymer (A).

In the stamper-receiving layer 11, other components may be included with the energy ray-curable acrylic ester copolymer (A) and the photopolymerization initiator (B) as appropriate. Examples of such other components include polymer components or oligomer components (C) that are not energy ray-curable, energy ray-curable polyfunctional monomer/oligomer components (D), crosslinking agents (E), and other additives (F).

Examples of polymer components or oligomer components (C) that are not energy ray-curable include polyacrylic esters, polyesters, polyurethanes, polycarbonates, and polyolefins; a polymer or oligomer having a weight average molecular weight (Mw) of from 3,000 to 2,500,000 is preferable.

Examples of energy ray-curable polyfunctional monomer/oligomer components (D) include dimethylol tricyclodecane di(meth)acrylate, trimethylolpropane tri(meth)acrylate, pentaerythritol tri(meth)acrylate, pentaerythritol tetra (meth)acrylate, dipentaerythritol hexa(meth)acrylate, 1,4-butanediol di(meth)acrylate, 1,6-hexanediol di(meth)acrylate, polyethylene glycol di(meth)acrylates, polyester oligo(meth)acrylates, and polyurethane oligo(meth)acrylates.

As a crosslinking agent (E), a polyfunctional compound that will react with a functional group possessed by the energy ray-curable acrylic ester copolymer (A) or the like can be used. Examples of such polyfunctional compounds include isocyanate compounds, epoxy compounds, amine compounds, melamine compounds, aziridine compounds, hydrazine compounds, aldehyde compounds, oxazoline compounds, metal alkoxide compounds, metal chelate compounds, metal salts, ammonium salts, and reactive phenol resins.

Examples of other additives (F) include ultraviolet absorbers, plasticizers, fillers, antioxidants, tackifiers, pigments, dyes, and coupling agents.

By including such other components in the stamper-receiving layer 11, it may be possible to improve the ease of transferring the convexoconcave pattern before curing, the strength after curing, the storage stability and so on.

Next, a description will be given of the case that the stamper-receiving layer 11 has a mixture of a polymer component that is not energy ray-curable and an energy ray-curable polyfunctional monomer or oligomer as a principal component thereof.

As the polymer component used in the stamper-receiving layer 11 in this case, for example a component as for the acrylic copolymer (a1) described above can be used. Moreover, as the energy ray-curable polyfunctional monomer or oligomer, one as for component (D) described above is selected. The mixing ratio between the polymer component and the energy ray-curable polyfunctional monomer or oligomer is preferably from 10 to 150 parts by weight, particularly preferably from 25 to 100 parts by weight, of the polyfunctional monomer or oligomer per 100 parts by weight of the polymer component.

In the case of including other components as described above in the stamper-receiving layer 11, the amount included thereof is preferably from 0 to 50 parts by weight, particularly preferably from 0 to 20 parts by weight, in total of the other components per 100 parts by weight of the energy ray-curable acrylic ester copolymer (A).

The thickness of the stamper-receiving layer 11 made of the above material is set so as to reduce spherical aberration and prevent inter-layer interference of a focus error signal, and is generally approximately from 10 to 50 $\mu$m, preferably approximately from 20 to 30 $\mu$m.

As each of the release sheets 12 and 12' laminated onto the stamper-receiving layer 11, a conventional publicly known one can be used; for example, one obtained by subjecting a film of a resin such as polyethylene terephthalate or polypropylene to release treatment with a silicone release agent or the like can be used.

To make the stamper-receiving layer 11 smooth, the side of the release sheet 12 that has been subjected to the release treatment (i.e. the side that contacts the stamper-receiving layer 11) preferably has a surface roughness (Ra) of not more than 0.1 $\mu$m. Moreover, the thickness of each of the release sheets 12 and 12' is generally approximately from 10 to 200 $\mu$m, preferably approximately from 20 to 100 $\mu$m.

It is generally preferable to make the release sheet that is peeled off first (the release sheet 12' in the present embodiment) be of a light release type, and make the release sheet that is peeled off afterward (the release sheet 12 in the present embodiment) be of a heavy release type.

To produce the optical disk-producing sheet 1 according to the present embodiment, first, a coating agent containing the material for constituting the stamper-receiving layer 11, and, if desired, also a solvent is prepared. The coating agent is then applied onto the release treatment-subjected surface of the release sheet 12 (or 12') so as to form the stamper-receiving layer 11, and then the release treatment-subjected surface of the other release sheet 12' (or 12) is placed onto the surface of the stamper-receiving layer 11 formed, thus laminating this release sheet onto the stamper-receiving layer 11. For the coating on of the coating agent, for example a coater such as a kiss roll coater, a reverse roll coater, a knife coater, a roll knife coater or a die coater can be used.

Next, a description will be given of an example of a method of producing an optical disk (single-sided two-layer type) using the optical disk-producing sheet 1 described above.

First, as shown in FIG. 2 (a), an optical disk substrate 2 having thereon a convexoconcave pattern comprising pits or grooves/lands is produced. This optical disk substrate 2 is generally made of a polycarbonate, and can be formed using a molding method such as injection molding.

As shown in FIG. 2 (b), a reflective layer 3 is then formed on the convexoconcave pattern of the optical disk substrate 2 by means such as sputtering. This reflective layer 3 may be a single-layer, or may be a multi-layer comprising, for example, a reflective layer, a dielectric layer, a phase change layer, and a dielectric layer, but in the present embodiment it is taken to be that a reflective layer 3 made of a silver alloy, in particular Ag-Nd-Cu, is formed.

Next, the release sheet 12' of the optical disk-producing sheet 1 is peeled off and removed, thus exposing the stamper-receiving layer 11, and then as shown in FIG. 2(c), the stamper-receiving layer 11 is pressed onto the surface of the reflective layer 3 on the optical disk substrate 2. The other release sheet 12 is then peeled off from the stamper-receiving layer 11 and removed, and then as shown in FIG. 2(d), a stamper S is pressed against the exposing stamper-receiving layer 11, thus transferring a convexoconcave pattern on the stamper S onto the stamper-receiving layer 11. In the case that the storage modulus of the stamper-receiving layer 11 at room temperature is from $1 \times 10^3$ to $1 \times 10^6$ Pa, the pressing on of the stamper S can be carried out at room temperature.

Note that in FIG. 2 (d), the stamper S is pressed against the stamper-receiving layer 11 from above the stamper-receiving layer 11, but alternatively the stamper S may be fixed with the transferring surface of the stamper S facing upward, the stamper-receiving layer 11 of the optical disk-producing sheet 1 then being pressed against the stamper S from above the stamper S.

The stamper S is generally made of a metallic material such as nickel or a nickel alloy or a transparent resin material such as a norbornene resin; in the present embodiment, it is taken to be that a stamper S made of nickel is used. Note that the stamper S shown in FIG. 2(d) has a plate-like shape, but there is no limitation to this, a roller shape also being possible.

In the above state, the stamper-receiving layer 11 is irradiated with energy rays from the optical disk substrate 2 side using an energy ray irradiating apparatus, thus curing the stamper-receiving layer 11.

As the energy rays, in general ultraviolet rays, electron rays, or the like are used. The energy ray irradiation amount varies according to the type of the energy rays, but, for example, in the case of ultraviolet rays, approximately 100 to 500 mJ/cm$^2$ in terms of the amount of radiation is preferable, and in the case of electron rays, approximately 10 to 1000 krad is preferable.

After the stamper-receiving layer 11 has been cured, the stamper S is separated away from the stamper-receiving layer 11. Here, the adhesive strength after curing of the stamper-receiving layer 11 to the reflective layer 3 is greater than the adhesive strength after curing of the stamper-receiving layer 11 to the stamper S, the difference between the two adhesive strengths being not less than 50 mN/25mm, and hence peeling away between the stamper-receiving layer 11 and the reflective layer 3 can be prevented when the stamper S and the stamper-receiving layer 11 are separated from one another.

In the present embodiment, the reflective layer 3 is made of a silver alloy, and the stamper S is made of nickel, and hence if the adhesive strength after curing of the stamper-receiving layer 11 to the reflective layer 3 is not less than 200 mN/25mm, and the adhesive strength after curing of the stamper-receiving layer 11 to the nickel is not more than 150 mN/25mm, then the difference between the two adhesive strengths can be made to be not less than 50 mN/25mm as described above.

Moreover, in the case that the adhesive strength after curing of the stamper-receiving layer 11 to the stamper S is less than the inter-layer adhesive strength between the optical disk substrate 2 and the reflective layer 3, the stamper-receiving layer 11 and the stamper S can be separated from one another by, for example, fixing the stamper S with the transferring surface of the stamper S facing upward and mechanically pushing the optical disk substrate 2 up, and even upon separating the stamper-receiving layer 11 and the stamper S from one another in this way, peeling away between the optical disk substrate 2 and the reflective layer 3 is prevented.

After the convexoconcave pattern of the stamper S has been transferred onto and fixed on the stamper-receiving layer 11 as described above so as to form pits or grooves/lands, next, as shown in FIG. 2(e), a semi-transmitting reflective layer 3' is formed on the convexoconcave pattern of the stamper-receiving layer 11 by means such as sputtering. This semi-transmitting reflective layer 3' may be a single-layer, or may be a multi-layer comprising, for example, a semi-transmitting reflective layer, a dielectric layer, a phase change layer, and a dielectric layer.

Here, if carboxyl groups are present in the material constituting the stamper-receiving layer 11, then the adhesive strength between the stamper-receiving layer 11 and the semi-transmitting reflective layer 3' is increased, and hence the strength, durability and so on of the optical disk obtained are improved.

Then, as shown in FIG. 2 (f), a cover sheet 5 is laminated onto the semi-transmitting reflective layer 3' via an adhesive 4, whereby an optical disk D is obtained. The cover sheet 5 constitutes part of the optical disk D such as a light-receiving surface or a label surface of the optical disk; a sheet (film) made of a resin such as a polycarbonate, polymethyl methacrylate or polystyrene can be used. As the adhesive 4, for example an acrylic ultraviolet ray-curable adhesive or the like can be used.

In the above optical disk producing method, a single-sided two-layer type optical disk was produced using the optical disk-producing sheet 1, but there is no limitation to this, it also being possible to produce, for example, a single-sided one-layer type optical disk using the optical disk-producing sheet 1.

The embodiment described above has been described to aid understanding of the present invention, not to limit the present invention. The various elements disclosed in the embodiment described above are thus deemed to also include all design variations and equivalents falling under the technical scope of the present invention.

For example, the release sheet 12 or the release sheet 12' of the optical disk-producing sheet 1 may be omitted.

EXAMPLES

Following is a more detailed description of the present invention through examples and so on; however, the scope of the present invention is not limited by these examples and so on.

[Example 1]

80 parts by weight of n-butyl acrylate and 20 parts by weight of acrylic acid were subjected to reaction in an ethyl acetate / methyl ethyl ketone mixed solvent (weight ratio 50:50) to obtain a solution (solid concentration 40 wt%) of an acrylic ester copolymer having carboxyl groups as functional groups. 2-methacryloyloxyethyl isocyanate was further added to this acrylic ester copolymer solution in an amount of 30 equivalents per 100 equivalents of acrylic acid in the copolymer, and reaction was carried out for 48 hours at 40°C under a nitrogen atmosphere, thus obtaining an energy ray-curable copolymer A of weight average molecular weight (Mw) 850, 000 having energy ray-curable groups and carboxyl groups on side chains thereof. The average side chain introduction rate of the energy ray-curable groups in the energy ray-curable copolymer A was 7.5 mol%, and the amount of carboxyl groups present in the energy ray-curable copolymer A was 20.2 mol% in terms of the monomers.

6.0 parts by weight of oligo{2-hydroxy-2-methyl-1-[4-(1-propenyl)phenyl]propanon e} (ESACURE KIP 150, made by lamberti s.p.a.) as a photopolymerization initiator, 100 parts by weight of a composition comprising an energy ray-curable polyfunctional monomer/oligomer (KAYARAD NKR-001, made by NIPPON KAYAKU CO., LTD.), and 2.8 parts by weight of a crosslinking agent comprising a polyisocyanate compound (Oribain BHS-8515, made by TOYO INK MFG. CO., LTD.) were dissolved in 100 parts by weight in terms of solids of the energy ray-curable copolymer solution A obtained, and the solid concentration was adjusted to 42 wt%, thus obtaining a stamper-receiving layer coating agent (1).

Meanwhile, two types of release sheet were prepared, that is a heavy release type release sheet (made by LINTEC Corporation, SP-PET50C, surface roughness of release treatment-subjected surface: Ra = 0.016 $\mu$m) obtained by subjecting one surface of a polyethylene terephthalate (PET) film (thickness: 50 $\mu$m) to release treatment with a heavy release type silicone resin, and a light release type release sheet (made by LINTEC Corporation, SP-PET38GS, surface roughness of release treatment-subjected surface: Ra = 0.023 $\mu$m) obtained by subjecting one surface of a PET film (thickness: 38 $\mu$m) to release treatment with a light release type silicone resin.

The above coating agent (1) was applied using a knife coater onto the release treatment-subjected surface of the heavy release type release sheet, and drying was carried out for 1 minute at 90°C, thus forming a stamper-receiving layer of thickness 25 $\mu$m, and then the release treatment-subjected surface side of the light release type release sheet was superposed onto the surface of this stamper-receiving layer, thus obtaining an optical disk-producing sheet.

[Example 2]

6.0 parts by weight of oligo{2-hydroxy-2-methyl-1-[4-(1-propenyl) phenyl]propanon e} (ESACURE KIP 150, made by lamberti s.p.a.) as a photopolymerization initiator, 100 parts by weight of a composition comprising an energy ray-curable difunctional monomer (dimethylol tricyclodecane diacrylate) (LIGHT-ACRYLATE DCP-A, made by KYOEISHA CHEMICAL Co., LTD.), and 2.8 parts by weight of a crosslinking agent comprising a polyisocyanate compound (Oribain BHS-8515, made by TOYO INK MFG. CO. , LTD.) were dissolved in 100 parts by weight in terms of solids of the energy ray-curable copolymer solution A obtained in Example 1, and the solid concentration was adjusted to 42 wt%, thus obtaining a stamper-receiving layer coating agent (2).

Using the stamper-receiving layer coating agent (2) obtained, an optical disk-producing sheet was produced as in Example 1.

[Example 3]

80 parts by weight of n-butyl acrylate, 10 parts by weight of methyl methacrylate, and 10 parts by weight of acrylic acid were subjected to reaction in an ethyl acetate / methyl ethyl ketone mixed solvent (weight ratio 50:50) to obtain a solution (solid concentration 40 wt%) of an acrylic ester copolymer having carboxyl groups as functional groups. 2-methacryloyloxyethyl isocyanate was further added to this acrylic ester copolymer solution in an amount of 30 equivalents per 100 equivalents of acrylic acid in the copolymer, and reaction was carried out for 48 hours at 40°C under a nitrogen atmosphere, thus obtaining an energy ray-curable copolymer B of weight average molecular weight (Mw) 800, 000 having energy ray-curable groups and carboxyl groups on side chains thereof. The average side chain introduction rate of the energy ray-curable groups in the energy ray-curable copolymer B was 3.74 mol%, and the amount of carboxyl groups present in the energy ray-curable copolymer B was 10.1 mol% in terms of the monomers.

6.0 parts by weight of oligo{2-hydroxy-2-methyl-1-[4-(1-propenyl)phenyl]propanon e} (ESACURE KIP 150, made by lamberti s.p.a.) as a photopolymerization initiator, 100 parts by weight of a composition comprising an energy ray-curable polyfunctional monomer/oligomer (KAYARAD NKR-001, made by NIPPON KAYAKU CO., LTD.), and 2.8 parts by weight of a crosslinking agent comprising a polyisocyanate compound (Oribain BHS-8515, made by TOYO INK MFG. CO., LTD.) were dissolved in 100 parts by weight in terms of solids of the energy ray-curable copolymer solution B obtained, and the solid concentration was adjusted to 42 wt%, thus obtaining a stamper-receiving layer coating agent (3).

Using the stamper-receiving layer coating agent (3) obtained, an optical disk-producing sheet was produced as in Example 1.

[Comparative Example 1]

80 parts by weight of n-butyl acrylate and 20 parts by weight of 2-hydroxyethyl acrylate were subjected to reaction in an ethyl acetate / methyl ethyl ketone mixed solvent (weight ratio 50:50) to obtain a solution (solid concentration 40 wt%) of an acrylic ester copolymer having hydroxyl groups as functional groups. 2-methacryloyloxyethyl isocyanate was further added to this acrylic ester copolymer solution in an amount of 48 equivalents per 100 equivalents of hydroxyl groups in the copolymer, and reaction was carried out for 48 hours at 40°C under a nitrogen atmosphere, thus obtaining an energy ray-curable copolymer C of weight average molecular weight (Mw) 800,000 having energy ray-curable groups and hydroxyl groups on side chains thereof. The average side chain introduction rate of the energy ray-curable groups in the energy ray-curable copolymer C was 7.85 mol%.

6.0 parts by weight of oligo{2-hydroxy-2-methyl-1-[4-(1-propenyl)phenyl]propanon e} (ESACURE KIP 150, made by lamberti s.p.a.) as a photopolymerization initiator, 100 parts by weight of a composition comprising an energy ray-curable polyfunctional monomer/oligomer (KAYARAD NKR-001, made by NIPPON KAYAKU CO., LTD.), and 2.8 parts by weight of a crosslinking agent comprising a polyisocyanate compound (Oribain BHS-8515, made by TOYO INK MFG. CO. , LTD.) were dissolved in 100 parts by weight in terms of solids of the energy ray-curable copolymer solution C obtained, and the solid concentration was adjusted to 35 wt%, thus obtaining a stamper-receiving layer coating agent (4).

Using the stamper-receiving layer coating agent (4) obtained, an optical disk-producing sheet was produced as in Example 1.

[Comparative Example 2]

85 parts by weight of 2-ethylhexyl acrylate and 15 parts by weight of 2-hydroxyethyl acrylate were subjected to reaction in an ethyl acetate / methyl ethyl ketone mixed solvent (weight ratio 50:50) to obtain a solution (solid concentration 40 wt%) of an acrylic ester copolymer having hydroxyl groups as functional groups. 2-methacryloyloxyethyl isocyanate was further added to this acrylic ester copolymer solution in an amount of 48 equivalents per 100 equivalents of hydroxyl groups in the copolymer, and reaction was carried out for 48 hours at 40°C under a nitrogen atmosphere, thus obtaining an energy ray-curable copolymer D of weight average molecular weight (Mw) 720,000 having energy ray-curable groups and hydroxyl groups on side chains thereof. The average side chain introduction rate of the energy ray-curable groups in the energy ray-curable copolymer D was 5.9 mol%.

6.0 parts by weight of oligo{2-hydroxy-2-methyl-1-[4-(1-propenyl)phenyl]propanon e} (ESACURE KIP 150, made by lamberti s.p.a.) as a photopolymerization initiator, 100 parts by weight of a composition comprising an energy ray-curable polyfunctional monomer/oligomer (KAYARAD NKR-001, made by NIPPON KAYAKU CO., LTD.), and 2 . 8 parts by weight of a crosslinking agent comprising a polyisocyanate compound (Oribain BHS-8515, made by TOYO INK MFG. CO., LTD.) were dissolved in 100 parts by weight in terms of solids of the energy ray-curable copolymer solution D obtained, and the solid concentration was adjusted to 42 wt%, thus obtaining a stamper-receiving layer coating agent (5).

Using the stamper-receiving layer coating agent (5) obtained, an optical disk-producing sheet was produced as in Example 1.

[Test Examples]

The optical disk-producing sheet produced in each of the Examples and the Comparative Examples was cut in advance into the same shape as an optical disk substrate by punching, and then the light release type release sheet was peeled off, a silver alloy reflective layer-possessing substrate (made by Sony Disc Technology Inc.) or a nickel BD (Blu-ray Disc) stamper (made by Sony Disc Technology Inc.) was placed onto the thus exposed stamper-receiving layer, and the two were pressed together through one traversal there and back of a rubber roller of width 45 mm and weight 2 kg.

Next, the laminate obtained was irradiated with ultraviolet rays from the heavy release type release sheet side (using an Adwill RAD-2000m/8 apparatus made by LINTEC Corporation; irradiation conditions: intensity 310 mW/cm$^2$, amount of radiation 300 mJ/cm$^2$), thus curing the stamper-receiving layer.

The heavy release type release sheet was then peeled off from the cured stamper-receiving layer, and in place of the heavy release type release sheet, an adhesive tape of width 25 mm comprising a 25 $\mu$m-thick polyethylene terephthalate substrate and a 20 $\mu$m-thick adhesive layer (adhesive: PAT1, made by LINTEC Corporation) was stuck onto the stamper-receiving layer. The adhesive strength between the cured stamper-receiving layer and the silver alloy reflective layer, or the adhesive strength between the cured stamper-receiving layer and the nickel stamper (180° peeling strength) was then measured in accordance with JIS Z0237. The results are shown in Table 1.

[Table 1]

| | Adhesive strength (mN/25mm) | | Difference between adhesive strengths (mN/25mm) |
|---|---|---|---|
| | To silver alloy reflective layer | To nickel stamper | |
| Example 1 | 1300 | 140 | 1160 |
| Example 2 | 1000 | 130 | 870 |
| Example 3 | 850 | 130 | 720 |
| Comparative Example 1 | 125 | 90 | 35 |
| Comparative Example 2 | 120 | 90 | 30 |

As is clear from Table 1, for each of the optical disk-producing sheets produced in the Examples, the adhesive strength between the cured stamper-receiving layer and the silver alloy reflective layer was much greater than the adhesive strength between the cured stamper-receiving layer and the nickel stamper, whereas for each of the optical disk-producing sheets produced in the Comparative Examples, the adhesive strength between the cured stamper-receiving layer and the silver alloy reflective layer was only slightly greater than the adhesive strength between the cured stamper-receiving layer and the nickel stamper, the difference between the two adhesive strengths being less than 50 mN/25mm.

[Producing Examples]

The optical disk-producing sheet produced in each of the Examples and the Comparative Examples was cut in advance into the same shape as an optical disk substrate by punching, and then the light release type release sheet was peeled off, and the thus exposed stamper-receiving layer was laminated onto a silver alloy reflective layer-possessing substrate (made by Sony Disc Technology Inc.), and pressed on with a pressure of 29 N.

Next, the heavy release type release sheet was peeled off from the stamper-receiving layer, and a nickel BD (Blu-ray Disc) stamper (made by Sony Disc Technology Inc.) was placed onto the thus exposed stamper-receiving layer, and pressed on with a pressure of 29 N, thus transferring a convexoconcave pattern of the stamper onto the stamper-receiving layer.

Next, irradiation with ultraviolet rays (using an Adwill RAD-2000m/8 apparatus made by LINTEC Corporation; irradiation conditions: intensity 310 mW/cm$^2$, amount of radiation 300 mJ/cm$^2$) was carried out from the optical disk substrate side, thus curing the stamper-receiving layer, so as to fix the convexoconcave pattern, and then the stamper and the stamper-receiving layer were separated from one another. At this time, for the stamper-receiving layer in each of the Examples, the stamper separated away from the stamper-receiving layer smoothly, there being no peeling away between the stamper-receiving layer and the silver alloy reflective layer, whereas for the stamper-receiving layer in each of the Comparative Examples, the stamper did not separate away from the stamper-receiving layer smoothly, there being places where the stamper-receiving layer and the silver alloy reflective layer peeled away from one another.

A 12 nm-thick silver alloy (Ag-Nd-Cu) semi-transmitting reflective layer was formed by sputtering on the surface of the stamper-receiving layer in each of the Examples. An acrylic ultraviolet ray-curable adhesive was applied by spin coating to a thickness of 8 $\mu$m onto the semi-transmitting reflective layer, and a polycarbonate resin cover sheet (Pure-Ace C110-67, made by TEIJIN CHEMICALS LTD., thickness: 67 $\mu$m) was further laminatedon. Irradiation with ultraviolet rays (using an LH-6 apparatus made by FUSION UV SYSTEMS, INC.; irradiation conditions: intensity 500 mW/cm$^2$, amount of radiation 500 mJ/cm$^2$) was then carried out, thus curing the acrylic ultraviolet ray-curable adhesive, whereby an optical disk was obtained.

INDUSTRIAL APPLICABILITY

According to an optical recordingmedium-producing sheet of the present invention, when a cured stamper-receiving layer and a stamper are separated from one another, peeling away between the stamper-receiving layer and a layer adjacent to the stamper-receiving layer can be prevented, and hence the optical recording medium-producing sheet of the present invention is useful for producing optical recording media with a good yield.

**Claims**

1. An optical recording medium-producing sheet having an energy ray-curable stamper-receiving layer onto which can be transferred convexoconcave of a stamper;
   wherein an adhesive strength after curing of said stamper-receiving layer to a layer that is adjacent to said stamper-receiving layer during pressing with the stamper is greater than an adhesive strength after curing of said stamper-receiving layer to the stamper, a difference between the two adhesive strengths being not less than 50 mN/25mm.

2. The optical recording medium-producing sheet according to claim 1, wherein the adhesive strength after curing of said stamper-receiving layer to the stamper is less than any inter-layer adhesive strength within a laminate having the stamper-receiving layer laminated therein during pressing with the stamper.

3. The optical recording medium-producing sheet according to claim 1 or 2, wherein the layer adjacent to said stamper-receiving layer during pressing with the stamper is made of silver or a silver alloy, and the adhesive strength after curing of said stamper-receiving layer to the silver or silver alloy is not less than 200 mN/25mm.

**4.** The optical recording medium-producing sheet according to any of claims 1 through 3, wherein the stamper is made of nickel, and the adhesive strength after curing of said stamper-receiving layer to the nickel is not more than 150 mN/25mm.

**5.** The optical recording medium-producing sheet according to any of claims 1 through 4, wherein said stamper-receiving layer has as a constituent component thereof an acrylic ester copolymer having energy ray-curable groups and carboxyl groups on side chains thereof.

**6.** The optical recording medium-producing sheet according to claim 5, wherein an amount of carboxyl groups present in said acrylic ester copolymer is from 5 to 30 mol% in terms of monomers.

Fig.1

# Fig.2

| INTERNATIONAL SEARCH REPORT | International application No. |
|---|---|
| | PCT/JP2005/005132 |

**A. CLASSIFICATION OF SUBJECT MATTER**
Int.Cl$^7$ G11B7/26

According to International Patent Classification (IPC) or to both national classification and IPC

**B. FIELDS SEARCHED**

Minimum documentation searched (classification system followed by classification symbols)
Int.Cl$^7$ G11B7/26

Documentation searched other than minimum documentation to the extent that such documents are included in the fields searched
Jitsuyo Shinan Koho          1922-1996     Jitsuyo Shinan Toroku Koho     1996-2005
Kokai Jitsuyo Shinan Koho     1971-2005     Toroku Jitsuyo Shinan Koho     1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,X | JP 2004-319046 A  (Lintec Corp., Sony Corp.), 11 November, 2004 (11.11.04), Par. Nos. [0083] to [0101], [0147] to [0149]; Figs. 3, 4 (Family: none) | 1-6 |
| X | JP 2004-71087 A  (Lintec Corp.), 04 March, 2004 (04.03.04), Par. Nos. [0096] to [0097], [0112] (Family: none) | 1-6 |
| Y | | 1-6 |
| Y | JP 2003-123332 A  (Lintec Corp.), 25 April, 2003 (25.04.03), Par. Nos. [0025], [0026], [0031]; Fig. 1 (Family: none) | 1-6 |

| [X] Further documents are listed in the continuation of Box C. | [ ] See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 April, 2005 (12.04.05) | 26 April, 2005 (26.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/005132

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-272237 A  (Sony Corp.),<br>26 September, 2003 (26.09.03),<br>Full text; all drawings<br>& WO 03/079341 A1 | 1-6 |
| Y | JP 9-115191 A  (Victor Company Of Japan, Ltd.),<br>02 May, 1997 (02.05.97),<br>Par. No. [0011]<br>(Family: none) | 1-6 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003272244 A